# EUROPÄISCHE PATENTSCHRIFT

(11) **EP 4 479 708 B1**
(45) Veröffentlichungstag und Bekanntmachung des Hinweises auf die Patenterteilung: **08.07.2026**
(21) Anmeldenummer: 23705475.4
(22) Anmeldetag: 08.02.2023
(51) Int. Cl.: G01D 5/347

(54) **POSITIONSSENSORVORRICHTUNG FÜR EINEN OPTISCHEN POSITIONSENCODER**
POSITION SENSOR DEVICE FOR AN OPTICAL POSITION ENCODER
DISPOSITIF DE DÉTECTION DE POSITION POUR CODEUR OPTIQUE DE POSITION

(30) Priorität: 16.02.2022 DE 102022103577
(43) Veröffentlichungstag der Anmeldung: 25.12.2024
(73) Patentinhaber: iC-Haus GmbH, 55294 Bodenheim (DE)
(72) Erfinder: QUASDORF, Joachim, 65207 Wiesbaden (DE)
(74) Vertreter: Feder Walter Ebert
(86) Internationale Anmeldenummer: PCT/DE2023/100101
(87) Internationale Veröffentlichungsnummer: WO 2023/155952

(56) Entgegenhaltungen:
- EP-A2- 0 714 171
- EP-A2- 2 966 451
- DE-A1- 102007 056 732
- DE-A1- 102014 010 759
- DE-A1- 19 604 502
- DE-B3- 10 332 413
- JP-B2- 6 753 788
- US-A- 4 870 559

## Beschreibung

Die vorliegende Erfindung betrifft eine Positionssensorvorrichtung für einen optischen Positionsencoder mit drei Analogsignal-Sensoren zur optischen Nonius-und-Segment-Spur-Abtastung von drei Analog-Spuren einer Maßverkörperung, insbesondere mit unterschiedlicher Strichzahl. Weitere Gegenstände der Erfindung bilden ein optischer Positionsencoder zur Absolutpositionsbestimmung, welcher eine Lichtquelle, eine von der Lichtquelle beleuchtbare Maßverkörperung mit mindestens drei Analog-Spuren, insbesondere mit unterschiedlicher Strichzahl, und eine Positionssensorvorrichtung aufweist sowie ein Verfahren zur Absolutpositionsbestimmung mit einer Lichtquelle, einer von der Lichtquelle beleuchtbaren Maßverkörperung und einer Positionssensorvorrichtung mit drei Analogsignal-Sensoren zur Abtastung der Maßverkörperung, wobei die Maßverkörperung mindestens drei Analog-Spuren, insbesondere mit unterschiedlicher Strichzahl, aufweist, mit der Lichtquelle die Maßverkörperung beleuchtet wird und mit den Analogsignal-Sensoren eine optische Nonius-und-Segment-Spur-Abtastung der Analog-Spuren durchgeführt wird.

Derartige Positionssensorvorrichtungen und optische Positionsencoder können dazu verwendet werden, um Bewegungen von Bauteilen zu erfassen. Hierbei wird die Maßverkörperung oder die Positionssensorvorrichtung an dem Bauteil angeordnet, so dass sich eine Relativbewegung zwischen Maßverkörperung und Positionssensorvorrichtung bei einer Bewegung des Bauteils ergibt.

Die optischen Positionsencoder können dabei in Durchlichtanordnung, mit einer zwischen Lichtquelle und Positionssensorvorrichtung angeordneten, teilweise lichtdurchlässigen Maßverkörperung oder in Reflexionsanordnung ausgestaltet sein, mit der Lichtquelle und Positionssensorvorrichtung auf der gleichen Seite des Lichts in Richtung der Positionssensorvorrichtung reflektierenden Maßverkörperung.

Die Maßverkörperung weist Analog-Spuren mit jeweils einem periodischen Muster aus hellen und dunklen Bereichen auf, welche insbesondere ein Strichmuster bilden. Bei einer Bewegung der Maßverkörperung können abwechselnd die hellen und dunklen Bereiche von den Analogsignal-Sensoren der Positionssensorvorrichtung während der optischen Abtastung erfasst werden. Die daraus generierten Sinus/Cosinus-Signale werden ausgewertet, so dass eine Angabe der Position der Maßverkörperung möglich ist.

Bei einer einfachen Nonius-Abtastung weist die Maßverkörperungen zwei Analog-Spuren auf, eine Master-Spur und eine Nonius-Spur, welche ein zur Master-Spur geringfügig verschiedenes Strichmuster aufweist, so dass über die gesamte Länge der Strichmuster der Master-Spur und der Nonius-Spur hinweg beispielsweise eine Periode Unterschied zwischen diesen besteht, welcher zu einem entlang der Strichmuster zunehmenden Versatz zwischen diesen führt. Die Master-Spur und die Nonius-Spur werden jeweils mit einem Analogsignal-Sensor der Positionssensorvorrichtungen, dem Master-Sensor bzw. dem Nonius-Sensor, optisch abgetastet. Aus dem Versatz der aus den Abtastergebnissen des Master-Sensors und des Nonius-Sensors generierten Sinus/Cosinus-Signale der Master-Spur und der Nonius-Spur wird ein Positionswert berechnet, welcher sich entlang der Spuren nur einmal ergibt und mit welchem die Absolutposition daher eindeutig bestimmt wird. Die mit der Nonius-Abtastung erzielte Positionsauflösung kann unterhalb der Periodenlänge der Strichmuster liegen, ist aber insbesondere bei hohen Positionsauflösungen liefernden Mustern anfällig für Mess- und Auswertefehler.

Diese Fehler lassen sich mit einer Master-, Nonius- und Segment-Spur-Abtastung, auch Nonius-und-Segment-Spur-Abtastung genannt, kompensieren. Hierzu weist die Maßverkörperung mit der Segment-Spur eine zusätzliche dritte Analog-Spur auf, wie beispielsweise in der DE 10 2014 103 514 A1 beschrieben. Die Segment-Spur wird mit einem dritten Analogsignal-Sensor der Positionssensorvorrichtungen, dem Segment-Sensor, optisch abgetastet. Da die Segment-Spur ein zur Master-Spur und zur Nonius-Spur geringfügig verschiedenes Strichmuster aufweist und auch der Versatz des aus den Abtastergebnissen des Segment-Sensors generierten Sinus/Cosinus-Signals der Segment-Spur relativ zu den Sinus/Cosinus-Signalen der Master-Spur und der Nonius-Spur bei der Bestimmung des eindeutigen Positionswerts und somit der Absolutposition berücksichtigt wird, lassen sich ansonsten bei einer einfachen Nonius-Abtastung auftretende Fehler kompensieren. Die Absolutposition wird bei der Nonius-und-Segment-Spur-Abtastung somit anhand der Phasenlage dreier Sinus/Cosinus-Signale ermittelt.

Dennoch können selbst bei der Bestimmung der Absolutposition mit einer Nonius-und-Segment-Spur-Abtastung weiterhin Fehler auftreten, beispielsweise durch externe Störfaktoren. Insbesondere bei der Verwendung zur Erzielung hoher Positionsauflösungen erforderlicher feinauflösender Analog-Spuren mit geringem Versatz untereinander können solche externen Störfaktoren zu signifikanten Fehlern bei der Bestimmung der Absolutposition führen. Dies können beispielsweise Verschmutzungen der Maßverkörperung oder der Positionssensorvorrichtung sein, welche bereits im geringen Ausmaß Erkennungsfehler, zum Beispiel geringe Versätze zwischen den Strichmustern der Analog-Spuren, bewirken. Ebenso bewirken auftretende Vibrationen Veränderungen der relativen Position der Positionssensorvorrichtung und der Maßverkörperung, welche nicht auf eine Veränderung der Position des Bauteils zurückzuführen sind. Da die Positionssensorvorrichtung und die Maßverkörperung an unterschiedlichen Bauteilen mit unterschiedlichen Ausdehnungskoeffizienten angeordnet sind, beispielsweise an einer Welle und einem Gehäuse, kann bei einer Veränderung der Umgebungs- oder Bauteiltemperatur ein temperaturabhängiger Drift zwischen diesen auftreten. Diese Störfaktoren wirken sich als Fehler bei der Absolutpositionsbestimmung aus, welche deren Verlässlichkeit schmälern.

Aus der US 4870559 A ist ein Messwandler-System mit einem Wandler zur Positionsbestimmung bekannt, welches zur Bestimmung der Absolutposition eine Kombination aus einem eindeutig zuordbaren Digitalcode und einem dem Digitalcode zuordbaren, wiederkehrenden Analogsignal nutzt.

Aus der DE 103 32 413 B3 ist eine Positionsmessvorrichtung zum Ermitteln von Winkel- oder Längspositionen mit einer Maßverkörperung bekannt, welche wenigstens drei Spuren mit jeweils einer unterschiedlichen Anzahl von Teilungsmarkierungen enthält.

Aus der JP 6753788 B2 ist eine Maßverkörperung für eine optische Positionsmessverkörperung bekannt, welche helle und dunkle Bereiche aufweist.

Aus der DE 196 04 502 A1 ist ein optoelektronischer Lesekopf bekannt, welcher geeignet ist, codierte digitale Werte von verspiegelten Codeflächen abzulesen.

Aus der DE 10 2014 010 759 A1 ist eine Positionsmessvorrichtung mit einer absoluten Positionscodierung bekannt, welche anhand mehrerer benachbarter Sequenzelemente eine binäre Codierung erstellt. Hierbei formen mehrere benachbarte Sequenzelemente einen Sequenzblock, deren Anordnung zueinander einen Messbereich eindeutig codiert.

Aus der EP 0 714 171 A2 ist eine Vorrichtung und ein Verfahren zur Bestimmung der Position eines Körpers bekannt, welches aus einem Feinmesssystem und einem damit gekoppelten Grobmesssystem besteht.

Aus der DE 10 2007 056 732 A1 ist eine Vorrichtung und ein Verfahren zur effizienten Analog-zu-Digital-Wandlung bekannt, welche aus analogen Messgrößen abhängige Digitalwerte erzeugen.

Aus der EP 2 966 451 A2 ist ein Verfahren zur optomechanischen Erfassung und Wandlung eines mechanischen, elektrostatischen, magnetostatischen oder elektrodynamischen Eingangssignal in amplitudenmodellierte elektromagnetische Strahlungs-Ausgangssignale bekannt, wobei die Wandlung des Signals unter Zuhilfenahme einer beweglichen Blende erfolgt.

Die **Aufgabe** der vorliegenden Erfindung liegt daher darin, eine Absolutpositionsbestimmung mit gesteigerter Verlässlichkeit zu ermöglichen.

Diese Aufgabe wird bei einer Positionssensorvorrichtung der eingangs genannten Art durch die Merkmale des Anspruchs 1 **gelöst**. Erfindungsgemäß ist vorgesehen, dass die Positionssensorvorrichtung mindestens drei Digitalcode-Sensoren zur optischen Abtastung jeweils einer digitalen Digitalcode-Spur der Maßverkörperung zur Absolutpositionsbestimmung und einen Referenz-Sensor zur optischen Abtastung einer Kontrast-Referenzspur der Maßverkörperung aufweist.

Mit den mindestens drei Digitalcode-Sensoren kann eine die Absolutposition zusätzlich zur Nonius-und-Segment-Spur-Abtastung identifizierende Abtastung von Digitalcode-Spuren durchgeführt werden, deren Muster im Gegensatz zu Analog-Spuren keinen Versatz untereinander aufweisen. Die Digitalcode-Sensoren ermöglichen es, einen Digitalcode aus den Abtastergebnissen der Digitalcode-Sensoren zu bestimmen, wobei das Abtastergebnis des Referenz-Sensors als Schaltschwelle bei der Erzeugung des Digitalcodes genutzt wird, und diesen zusätzlich zu den Abtastergebnissen der Nonius-und-Segment-Spur-Abtastung zur Absolutpositionsbestimmung zu verwenden. Diese Positionssensorvorrichtung ermöglicht daher beispielsweise die Nutzung von weniger fehleranfälligen Analog-Spuren mit einem stärker zunehmenden Versatz der Analog-Spur-Muster untereinander zur Absolutpositionsbestimmung, wobei sich jedoch ein über die Analog-Spuren hinweg ersteckendes wiederholendes Muster bildet, so dass die Nonius-und-Segment-Spur-Abtastung an mehreren Stellen der Maßverkörperung die gleichen Positionswerte liefert, da anhand der zusätzlichen Abtastergebnisse der Digitalcode-Sensoren eine eindeutige Absolutposition unter diesen Stellen gleicher Positionswerte bestimmbar ist, ohne dass es im Vergleich zu einer reinen Nonius-und-Segment-Spur-Abtastung mit einem kleineren Versatz zu Einbußen in der Positionsauflösung kommt. Mit der Positionssensorvorrichtung wird die Fehlertoleranz verbessert, was zu einer gesteigerten Verlässlichkeit der Absolutpositionsbestimmung führt.

In vorteilhafter Weise weisen die Analogsignal-Sensoren jeweils mehrere Fotodioden auf, insbesondere zur Erzeugung eines positiven und eines negativen Sinus-Signals und/oder eines Cosinus-Signals je Analog-Spur. Die, insbesondere vier, Fotodioden eines Analogsignal-Sensors können, insbesondere vier, benachbarte Stellen der Analog-Spur abtasten. Aus den Abtastergebnissen der einzelnen Fotodioden eines Analogsignal-Sensors lassen sich zur Positionsbestimmung auf einfache Weise ein positives und ein negatives Sinus-Signal und/oder Cosinus-Signal erzeugen. Durch die Verwendung hochauflösender HD-Fotodioden können besonders klirrarme Sinus-Signale und/oder Cosinus-Signale erzeugt werden. Dies ermöglicht bei der Auswertung der Nonius-und-Segment-Spur-Abtastung eine feinere Interpolation zur Absolutpositionsbestimmung. Die hochauflösende HD-Fotodioden aufweisenden Analogsignal-Sensoren können daher zusammen mit Analog-Spuren eingesetzt werden, deren Analog-Spur-Muster einen stärker zunehmenden Versatz aufweisen, ohne dass es zu einer Verminderung der Positionsauflösung kommt.

Bevorzugt sind die, insbesondere vier, Fotodioden des Analogsignal-Sensors derart angeordnet, dass sie, insbesondere vier, benachbarte Stellen entlang des Verlaufs der Analog-Spur abtasten können. Die Fotodioden des Analogsignal-Sensors können derart angeordnet sein, dass die Abtastung quer, insbesondere rechtwinklig, zum Verlauf der Striche des Strichmusters der Analog-Spur erfolgen kann.

In diesem Zusammenhang hat es sich als vorteilhaft erwiesen, wenn die Fotodioden der Analogsignal-Sensoren auf Wellenlängen von weniger als 550 nm, insbesondere weniger als 500 nm, optimiert sind. Durch diese Optimierung kann die Auflösung der Analogsignal-Sensoren zusätzlich gesteigert werden.

Erfindungsgemäß weist die Positionssensorvorrichtung einen Referenz-Sensor zur optischen Abtastung einer Kontrast-Referenzspur der Maßverkörperung auf. Mit dem Referenz-Sensor kann aus der Kontrast-Referenzspur der Maßverkörperung eine Schaltschwelle ausgelesen werden. Anhand der Schaltschwelle kann bei der Auswertung der Abtastergebnisse der Digitalcode-Sensoren bestimmt werden, ob ein heller oder ein dunkler Bereich der Digitalcode-Spur abgetastet wurde. Die Schaltschwelle kann angeben, ob es sich bei dem Abtastergebnis um den Bitwert "0" oder "I" handelt.

In vorteilhafter Weise handelt es sich bei den Digitalcode-Sensoren um Sensoren zur optischen Abtastung eines Digitalcodes in Form eines Gray-Codes. Mit den Sensoren zur Abtastung eines Gray-Codes können zu einem falschen Digitalcode führende Fehler auf einfache Weise vermieden werden.

In einer vorteilhaften Ausgestaltung weist die Positionssensorvorrichtung einen vierten Digitalcode-Sensor zur optischen Abtastung einer digitalen Digitalcode-Spur der Maßverkörperung auf. Mit dem vierten Digitalcode-Sensor kann eine zur Synchronisation dienende vierte Digitalcode-Spur der Maßverkörperung abgetastet werden. Mit vier Digitalcode-Sensoren zur Abtastung von vier Digitalcode-Spuren der Maßverkörperung kann die Positionssensorvorrichtung zur Absolutpositionsbestimmung zusammen mit einer Maßverkörperung genutzt werden, deren Abschnitte der Maßverkörperung, welche eine Wiederholung des sich über die Analog-Spuren hinweg erstreckenden wiederholenden Musters umfassenden, durch die Digitalcode-Spuren in mehrere Teile, insbesondere in mindestens zwei Hälften, unterteilt werden.

Gemäß einer konstruktiven Ausgestaltung wird vorgeschlagen, dass die Digitalcode-Sensoren und/oder der Referenz-Sensor einzelne Fotodioden sind. Durch die Ausgestaltung der einzelnen Digitalcode-Sensoren und/oder des Referenzsensors als eine Fotodiode kann die konstruktive Komplexität der Positionssensorvorrichtung reduziert werden.

In vorteilhafter Weise weisen die Analogsignal-Sensoren, der Referenz-sensor und/oder die Digitalcode-Sensoren mindestens eine chevronförmige Fotodiode auf. Bei aus mehreren Fotodioden bestehenden Analogsignal-Sensoren kann jede Fotodiode des Analogsignal-Sensors als chevronförmige Fotodiode ausgestaltet sein. Die Ausgestaltung der Sensoren als chevronförmige Fotodioden ermöglicht es, diese verschachtelt zueinander anzuordnen. Damit kann eine höhere Flächenausnutzung erreicht werden.

Weiter vorteilhaft ist es, wenn die Digitalcode-Sensoren, insbesondere die Digitalcode-Sensoren und der Referenz-Sensor, gegenüber den Analogsignal-Sensoren baulich gruppiert angeordnet sind. Durch die bauliche Gruppierung können die Digitalcode-Sensoren, insbesondere auch zusammen mit dem Referenz-Sensor, nicht nur schaltungstechnisch, sondern auch baulich benachbart sein. Die baulich gruppierten Sensoren ermöglichen die Verwendung einer Maßverkörperung mit benachbart zueinander angeordneten Digitalcode-Spuren, insbesondere auch einer zu diesen benachbart angeordneten Kontrast-Referenzspur, so dass diese im Wesentlichen mit Licht gleicher Intensität beleuchtet und dieses bei der optischen Abtastung von den Sensoren erfasst werden kann. Die Digitalcode-Sensoren können, insbesondere zusammen mit dem Referenz-Sensor, in einer Reihe angeordnet sein. Der Referenz-Sensor kann mittig zwischen den Digitalcode-Sensoren angeordnet sein. Die baulich gruppierten Sensoren können am Rand oder in der Mitte der Positionssensorvorrichtung, insbesondere radial nach außen verlaufend, angeordnet sein.

Gemäß einer weiteren Ausführungsform der Erfindung sind die Analogsignal-Sensoren zueinander baulich gruppiert angeordnet. Durch die bauliche Gruppierung können die Analogsignal-Sensoren nicht nur schaltungstechnisch, sondern auch baulich benachbart sein. Die baulich gruppierten Sensoren ermöglichen die Verwendung einer Maßverkörperung mit benachbart zueinander angeordneten Analog-Spuren, so dass diese im Wesentlichen mit Licht gleicher Intensität beleuchtet und dieses bei der optischen Abtastung von den Analogsignal-Sensoren erfasst werden kann. Die einzelnen Fotodioden der Analogsignal-Sensoren können matrixartig angeordnet sein, wobei insbesondere die einzelnen Fotodioden eines jeden Analogsignal-Sensors in einer Zeile oder Spalte der Matrix angeordnet sind. Die Gesamtheit der Fotodioden der Analogsignal-Sensoren kann insbesondere in einer 3x4-Matrix angeordnet sein.

In vorteilhafter Weise sind die Analogsignal-Sensoren ein monolithisches 3-Kanal-HD-Phased-Array aus mehreren Fotodioden, insbesondere zur Erzeugung eines positiven und eines negativen Sinus-Signals und/oder eines Cosinus-Signals je Analog-Spur. Ein monolithisches 3-Kanal-HD-Phased-Array wird aus einem Substrat eines kristallinen Halbleitermaterials hergestellt. Das 3-Kanal-HD-Phased-Array, HD für "High Definition", kann jeweils einen Kanal für die Abtastergebnisse der drei Analog-Spuren aufweisen. Das 3-Kanal-HD-Phased-Array kann ein ineinander verschachteltes Fotodiodenlayout, insbesondere aus chevronförmigen Fotodioden, aufweisen. Auf diese Weise können besonders klirrarme Sinus/Cosinus-Signale erzielt werden, die bei einer Interpolation eine höhere Winkelgenauigkeit ermöglichen.

Bevorzugt kann das monolithische 3-Kanal-HD-Phased-Array durch feine Fotodioden-Strukturen auf grünes Licht, insbesondere auf eine Wellenlänge von weniger als 550 nm, optimiert sein.

Insbesondere bevorzugt kann das monolithische 3-Kanal-HD-Phased-Array durch feinere Fotodioden-Strukturen auf blaues Licht, insbesondere auf eine Wellenlänge von weniger als 500 nm, optimiert sein.

Bei einem optischen Positionsencoder der eingangs genannten Art wird zur Lösung der vorstehend genannten Aufgabe vorgeschlagen, dass die Maßverkörperung mindestens drei Digitalcode-Spuren sowie eine Kontrast-Referenzspur aufweist und die Positionssensorvorrichtung in der zuvor beschriebenen Weise ausgebildet ist, wodurch sich die im Zusammenhang mit der Positionssensorvorrichtung beschriebenen Vorteile ergeben.

Die Analog-Spuren können jeweils eine Abfolge von hintereinander angeordneten einzelnen Strichen aufweisen, welche ein Strichmustern bilden. Die Striche können quer zum Verlauf der jeweiligen Analog-Spur, insbesondere in radialer Richtung entlang des Radius der Maßverkörperung, verlaufen.

Bei der Lichtquelle des Positionsencoders kann es sich insbesondere um eine LED handeln.

Die Lichtquelle kann derart angeordnet sein, dass mit ihr die Maßverkörperung des Positionsencoders inklusive sämtliche Spuren beleuchtet werden kann.

In vorteilhafter Weise kann der optische Positionsencoder lagerlos ausgestaltet sein. Auf ein externe Störfaktoren ausgleichendes und/oder Einflüsse externer Störfaktoren minderndes Lager des optischen Positionsencoders kann auf einfache Weise verzichtet werden.

Weiter vorteilhaft ist es, wenn der optische Positionsencoder im Temperaturbereich von -40°C bis 125°C, insbesondere oberhalb von 70°C, betreibbar ist.

Bevorzugt weist der optische Positionsencoder eine Auflösung von 25 Bit bei der optischen Nonius-und-Segment-Spur-Abtastung auf.

Bei einer vorteilhaften Ausgestaltung weist der Positionsencoder eine Auswerteeinheit zur Auswertung der Abtastergebnisse der Analogsignal-Sensoren, der Digitalcode-Sensoren und/oder des Referenz-Sensors auf. Mit der Auswerteeinheit kann zudem die Absolutposition bestimmt werden.

Eine weitere Ausgestaltung sieht vor, dass jeder Digitalcode-Spur ein Digitalcode-Sensor und/oder jeder Analog-Spur ein Analogsignal-Sensor zugeordnet ist. Durch die Zuordnung jeweils eines Sensors der Positionssensorvorrichtung zu jeweils einer Spur der Maßverkörperung können die Spuren zur Absolutpositionsbestimmung effektiv und schnell abgetastet werden.

Gemäß einer konstruktiven Ausgestaltung wird vorgeschlagen, dass die Analog-Spuren und/oder Digitalcode-Spuren kreisförmig verlaufen. Mit kreisförmig verlaufenden Analog-Spuren oder Digitalcode-Spuren kann die Absolutposition, insbesondere in Form einer absoluten Winkelposition, auf einfache Weise ermittelt werden. Insbesondere können die Analog-Spuren und/oder Digitalcode-Spuren konzentrisch zueinander angeordnet sein. Vorzugsweise weist die Maßverkörperung dabei eine kreisförmige Form auf. Die Maßverkörperung kann insbesondere als Kreisscheibe oder als flacher Ring ausgestaltet sein. Die Analog-Spuren und/oder Digitalcode-Spuren können entlang eines Kreisumfangs einer derart ausgestalteten Maßverkörperung verlaufen.

Gemäß einer weiteren konstruktiven Ausgestaltung wird vorgeschlagen, dass die Analog-Spuren und/oder Digitalcode-Spuren geradlinig verlaufen. Mit geradlinig verlaufenden Analog-Spuren und/oder Digitalcode-Spuren kann die Absolutposition auf einfache Weise als eine absolute Translationsposition bestimmt werden. Die Analog-Spuren und/oder Digitalcode-Spuren können zueinander parallelverlaufend, insbesondere quer zu ihren Längsrichtungen nebeneinanderliegend, angeordnet sein.

Bei einer vorteilhaften Ausgestaltung weist die Maßverkörperung eine Kontrast-Referenzspur auf. Die Kontrast-Referenzspur ist eine von den Digitalcode-Spuren und den Analog-Spuren getrennte, insbesondere aber benachbart zu den Digitalcode-Spuren angeordnete, eigenständige Spur sein. Wie die Analog-Spuren und/oder Digitalcode-Spuren kann die Kontrast-Referenzspur kreisförmig oder geradlinig verlaufen. Die Kontrast-Referenzspur kann musterlos, insbesondere homogen, ausgestaltet sein. Zur Bereitstellung einer Schaltschwelle kann die Kontrast-Referenzspur derart ausgestaltet sein, dass sie bei Beleuchtung durch die Lichtquelle in Durchlichtanordnung Licht zur Positionssenorvorrichtung durchlässt bzw. in Reflexionsanordnung Licht zur Positionssensorvorrichtung reflektiert, dessen Intensität zwischen der bei gleicher Beleuchtung maximal und minimal von den Digitalcode-Spuren transmittierten bzw. reflektierten Intensitäten liegt. Die sich bei der Abtastung der Kontrast-Referenzspur ergebenen Signalstärke kann insbesondere 50 % der maximalen Signalstärke bei Abtastung der Digitalcode-Spuren entsprechen.

Eine weitere Ausgestaltung sieht vor, dass die Maßverkörperung eine vierte Digitalspur aufweist. Mit mindestens vier Digitalcode-Spuren kann eine feinere Unterteilung der Maßverkörperung zur Synchronisation erfolgen. Zur Synchronisation mit den Analog-Spuren kann mittels der vier Digitalcode-Spuren eindeutig bestimmbar sein, welche Hälfte welchen Abschnitts der Maßverkörperung mittels der Analogsignal-Sensoren und Digitalcode-Sensoren abgetastet wird.

In einer vorteilhaften Ausgestaltung sind die Digitalcode-Spuren als einzelne Bits eines Digitalcodes, insbesondere in Form eines Gray-Codes, codiert. Der Digitalcode kann sich dabei quer zu den Digitalcode-Spuren über diese hinweg erstrecken. Für eine Position entlang der Maßverkörperung, insbesondere entlang des Umfangs der Maßverkörperung, liefert jede der Digitalcode-Spuren daher einen Bitwert des Digitalcodes. Das Auslesen des Digitalcodes kann quer zur Längsachse der Digitalcode-Spuren erfolgen. Die Codierung in Form eines Gray-Codes bietet den Vorteil, dass sich im Unterschied zu gewöhnlichen binären Codes nicht mehrere Bits gleichzeitig ändern, sondern sich benachbarte Positionen nur in einem einzigen Bit unterscheiden. Auslesefehler, wie sie bei sich mehreren ändernden Bits eines gewöhnlichen binären Codes ergeben, können durch die Verwendung des Gray-Codes vermieden werden.

Vorzugsweise weist die Maßverkörperung ein von den Analog-Spuren gebildetes, sich entlang der Maßverkörperung, insbesondere 4-fach, 8-fach oder 16-fach, wiederholendes gemeinsames Muster auf. Das sich wiederholende gemeinsame Muster der Analog-Spuren wird durch die Analog-Spur-Muster der einzelnen parallel zueinander verlaufenden Analog-Spuren gebildet. Dabei können die Analog-Spur-Muster einen derart entlang der Maßverkörperung stark zunehmenden Versatz untereinander aufweisen, dass mehrere Positionen auf der Maßverkörperung existieren, an welchen das über sämtliche Analog-Spuren hinweg gebildete gemeinsame Muster identisch ist. Bei der Nonius-und-Segment-Spur-Abtastung liefern diese Stellen der Maßverkörperung die gleichen Positionswerte, wobei anhand der zusätzlichen Abtastergebnisse der Digitalcode-Sensoren eine eindeutige Absolutpositionsbestimmung unter diesen Stellen gleicher Positionswerte möglich ist. Durch die Verwendung von Analog-Spuren, die ein entlang der Maßverkörperung wiederholendes gemeinsames Muster bilden, insbesondere aufgrund des stärker entlang der Maßverkörperung zunehmenden Versatzes zwischen den Analog-Spuren-Mustern, kann der optische Positionsencoder weniger fehleranfällig für externe Störfaktoren, insbesondere temperaturbeständiger, ausgestaltet werden. Durch das sich wiederholende gemeinsame Muster wird die Maßverkörperung in mehrere Abschnitte unterteilt, deren Länge jeweils einer Periodenlänge des gemeinsamen Musters entspricht. Innerhalb jeder dieser Abschnitte der Maßverkörperung sind die einzelnen Positionswerte der Nonius-und-Segment-Spur-Abtastung eindeutig.

In vorteilhafter Weise wird eine Wiederholung des gemeinsamen Musters durch 256 Perioden des Musters der Master-Spur, 255 Perioden des Musters der Nonius-Spur und 240 Perioden des Musters der Segment-Spur oder 64 Perioden des Musters der Master-Spur, 63 Perioden des Musters der Nonius-Spur und 56 Perioden des Musters der Segment-Spur gebildet.

In diesem Zusammenhang ist es besonders vorteilhaft, wenn die Maßverkörperung durch das sich periodisch wiederholende gemeinsame Muster in einzelne der Periodenlänge des gemeinsamen Musters entsprechende Abschnitte, insbesondere Winkel-Sektoren, insbesondere bevorzugt in 90°-Sektoren, 45°-Sektoren oder 22,5°-Sektoren, unterteilt ist. Die Unterteilung der Maßverkörperung in einzelne Winkel-Sektoren ermöglicht es auf einfache Weise, diesen eine als Digitalcode in den Digitalcode-Spuren codierte individuelle Adresse zuzuordnen. Durch die auslesbare Adresse der einzelnen Winkel-Sektoren kann zusammen mit dem innerhalb eines Winkel-Sektors eindeutige Positionswert aus der Nonius-und-Segment-Spur-Abtastung eine eindeutige Absolutposition bestimmt werden.

In einer weiteren konstruktiven Ausgestaltung ist den Digitalcode-Sensoren, insbesondere jeder einzelnen Fotodiode, ein integrierender Verstärker zur Ermöglichung eines energiesparenden Blitzbetriebs nachgeschaltet. Durch den integrierenden Verstärker kann selbst bei einer kurzen intensiven Beleuchtung der Maßverkörperung durch die Lichtquelle in einem Blitzbetrieb eine Auswertung des Abtastergebnisses ermöglicht werden. Die Zeit sowie der Energiebedarf der optischen Abtastung der Maßverkörperung durch die Digitalcode-Sensoren und/oder den Referenz-Sensor kann auf diese Weise reduziert werden. Ein Batteriebetrieb des optischen Positionsencoders, insbesondere ein batteriebetriebener Multiturn-Betrieb, kann ermöglicht werden.

Weiter vorteilhaft ist es, wenn die Lichtquelle Licht mit einer Wellenlänge von weniger als 550 nm, insbesondere von weniger als 500 nm, aussendet. Durch die Verwendung von Licht mit einer Wellenlänge unterhalb von 550 nm, insbesondere unterhalb von 500 nm, kann die Auflösung des Positionsencoders weiter gesteigert werden. In bevorzugter Weise können die Analogsignal-Sensoren, Digitalcode-Sensoren und der Referenz-Sensor auf die von der Lichtquelle primär emittierten Wellenlänge optimiert sein, wodurch die Effizienz des Positionsencoders weiter gesteigert werden kann.

In einer vorteilhaften Ausgestaltung sind die Analog-Spuren zueinander, insbesondere radial, benachbart angeordnet. Durch die benachbarte Anordnung der Analog-Spuren zueinander kann die Abtastgenauigkeit verbessert werden, da im Wesentlichen Licht gleicher Intensität zur Beleuchtung der benachbarten Analog-Spuren genutzt werden kann. Fehler des Abtastergebnisses aufgrund unterschiedlich intensiver Beleuchtung der einzelnen Spuren können vermieden werden. In diesem Zusammenhang hat es sich als besonders vorteilhaft erwiesen, wenn zwischen den benachbarten Analog-Spuren keine weiteren Spuren, insbesondere keine Digitalcode-Spur und/oder keine Kontrast-Referenzspur, angeordnet sind.

Eine weitere Ausgestaltung sieht vor, dass die Digitalcode-Spuren, insbesondere die Digitalcode-Spuren und die Kontrast-Referenzspur, zueinander benachbart angeordnet sind. Durch die benachbarte Anordnung der Digitalcode-Spuren, insbesondere der Digitalcode-Spuren und der Kontrast-Referenzspur, zueinander kann die Abtastgenauigkeit verbessert werden, da im Wesentlichen Licht gleicher Intensität zur Beleuchtung der benachbarten Digitalcode-Spuren, insbesondere der Digitalcode-Spuren und der Kontrast-Referenzspur, genutzt werden kann. Fehler des Abtastergebnisses aufgrund unterschiedlich intensiver Beleuchtung der einzelnen Spuren können vermieden werden. In diesem Zusammenhang hat es sich als besonders vorteilhaft erwiesen, wenn zwischen den benachbarten Digitalcode-Spuren, insbesondere den Digitalcode-Spuren und der Kontrast-Referenzspur, keine weiteren Spuren, insbesondere keine Analog-Spuren, angeordnet sind.

Bei einem Verfahren der eingangs genannten Art wird zur **Lösung** der vorstehend genannten Aufgabe vorgeschlagen, dass die Positionssensorvorrichtung mindestens drei Digitalcode-Sensoren und die Maßverkörperung mindestens drei Digitalcode-Spuren aufweist, wobei die Digitalcode-Spuren mit den Digitalcode-Sensoren optisch abgetastet werden, aus den Abtastergebnissen der Digitalcode-Sensoren ein, insbesondere mindestens 3-Bit, insbesondere bevorzugt 4-Bit, Digitalcode erzeugt wird und mit dem Digitalcode eine Absolutposition bestimmt wird, und mit einem Referenz-Sensor eine Kontrast-Referenzspur der Maßverkörperung optisch abgetastet wird, und das Abtastergebnis des Referenz-Sensors als Schaltschwelle bei der Erzeugung des Digitalcodes genutzt wird.

Mit dem aus dem Abtastergebnis der Digitalcode-Sensoren erzeugten Digitalcode wird zusätzlich zu den Abtastergebnissen der Nonius-und-Segment-Spur-Abtastung das Ergebnis einer weiteren Abtastung zur Absolutpositionsbestimmung verwendet. Dieses Verfahren ermöglicht daher beispielsweise die Nutzung von weniger fehleranfälligen Analog-Spuren mit einem stärker zunehmenden Versatz der Analog-Spur-Muster untereinander bei der Absolutpositionsbestimmung, welche jedoch ein über die Analog-Spuren hinweg erstreckendes wiederholendes Muster bilden, so dass die Nonius-und-Segment-Spur-Abtastung an mehreren Stellen der Maßverkörperung die gleichen Positionswerte liefert, da anhand des Digitalcodes eine eindeutige Absolutposition unter diesen Stellen gleicher Positionswerte bestimmt wird, ohne dass es im Vergleich zu einer reinen Nonius-und-Segment-Spur-Abtastung mit einem kleineren Versatz zu Einbußen in der Positionsauflösung kommt. Auf diese Weise wird die Fehlertoleranz verbessert, was zu einer gesteigerten Verlässlichkeit der Absolutpositionsbestimmung führt.

In vorteilhafter Weise wird bei dem Verfahren zur Absolutpositionsbestimmung ein optischer Positionsencoder der zuvor beschriebenen Art genutzt.

Die im Zusammenhang mit der erfindungsgemäßen Positionssensorvorrichtung sowie dem erfindungsgemäßen optischen Positionsencoder beschriebenen Merkmale können einzeln oder in Kombination auch bei dem Verfahren zur absoluten Positionsbestimmung zur Anwendung kommen. Es ergeben sich die gleichen Vorteile, welche bereits beschrieben wurden.

In diesem Zusammenhang ist es besonders vorteilhaft, wenn mittels des Digitalcodes ein Abschnitt unter mehreren, insbesondere 4, 8 oder 16, Abschnitten der Maßverkörperung, welche jeweils Stellen mit gleichen Positionswerten aus der Nonius-und-Segment-Spur-Abtastung aufweisen, bestimmt wird. Mit dem aus den Abtastergebnissen der Digitalcode-Sensoren bestimmten Digitalcode kann auf einfache Weise ein Abschnitt unter mehreren Abschnitten der Maßverkörperung bestimmt werden, welchem dieser Digitalcode zugeordnet ist. Auf diese Weise ist es selbst dann möglich, eine Absolutposition zu bestimmen, wenn die Analog-Spuren ein sich wiederholendes gemeinsames Muster bilden, so dass an mehreren Stellen der Maßverkörperung die den gleichen Positionswert liefert und eine eindeutige Absolutpositionsbestimmung allein anhand der nicht möglich ist.

In diesem Zusammenhang ist es weiter vorteilhaft, wenn mittels des Digitalcodes eine Hälfte des Abschnitts unter den mehreren Abschnitten der Maßverkörperung, welche jeweils Stellen mit gleichen Positionswerten aus der aufweisen, bestimmt wird. Mit dieser zusätzlichen Unterteilung der Abschnitte kann eine stabilere und zuverlässigere Synchronisation der Abtastergebnisse der Analog-Spuren und der Digitalcode-Spuren zur Bestimmung der Absolutposition erzielt werden. Beispielsweise kann bei einer Maßverkörperung mit 45°-Sektoren jeder Winkel-Sektor zusätzlich in zwei individuell adressierte 22.5°-Hälften unterteilt werden.

Erfindungsgemäß wird mit einem Referenz-Sensor eine Kontrast-Referenzspur der Maßverkörperung optisch abgetastet und das Abtastergebnis des Referenz-Sensors als Schaltwelle bei der Erzeugung des Digitalcodes genutzt. Die Kontrast-Referenzspur kann derart musterlos ausgestaltet sein, dass sie unabhängig von der Position der Maßverkörperung bei der Abtastung durch den Referenz-Sensor ein gleichbleibendes und nur von der Intensität der Beleuchtung durch die Lichtquelle abhängiges Abtastergebnis liefert. Da dieses Abtastergebnis nur von der Intensität der Beleuchtung durch die Lichtquelle abhängen kann, eignet es sich als Schaltschwelle, anhand welcher bestimmt werden kann, ob es sich bei den Abtastergebnissen der Digitalcode-Sensoren jeweils um einen Bitwert "0" oder "I" handelt, d. h. ob ein helles oder dunkles Feld der jeweiligen Digitalcode-Spur durch den jeweiligen Digitalcode-Sensor abgetastet wird. Die Schaltschwelle kann bei der Erzeugung des Digitalcodes derart genutzt werden, dass Abtastergebnisse der Digitalcode-Sensoren mit Intensitäten oberhalb der Schaltwelle als Bitwert "I" unter Abtastergebnisse der Digitalcode-Sensoren mit Intensitäten unterhalb der Schaltwelle als Bitwert "0" weiterverarbeitet werden.

Weitere Einzelheiten und Vorteile einer erfindungsgemäßen Positionssensorvorrichtung, eines erfindungsgemäßen optischen Positionsencoders sowie eines erfindungsgemäßen Verfahrens soll nachfolgend anhand der in den Figuren schematisch dargestellten Ausführungsbeispielen der Erfindung exemplarisch erläutert werden. Darin zeigt:
- Fig. 1: eine erfindungsgemäße Positionssensorvorrichtung in einer Ausgestaltung mit vier Digitalcode-Sensoren,
- Fig. 2: einen optischen Positionsencoder mit der Positionssensorvorrichtung der Fig. 1 und einer über dieser befindlichen Maßverkörperung,
- Fig. 3: eine den Aufbau eines ersten Ausführungsbeispiels der Maßverkörperung mit drei Digitalcode-Spuren erläuternde Darstellung und
- Fig. 4: eine den Aufbau eines zweiten Ausführungsbeispiels der Maßverkörperung mit vier Digitalcode-Spuren erläuternde Darstellung.

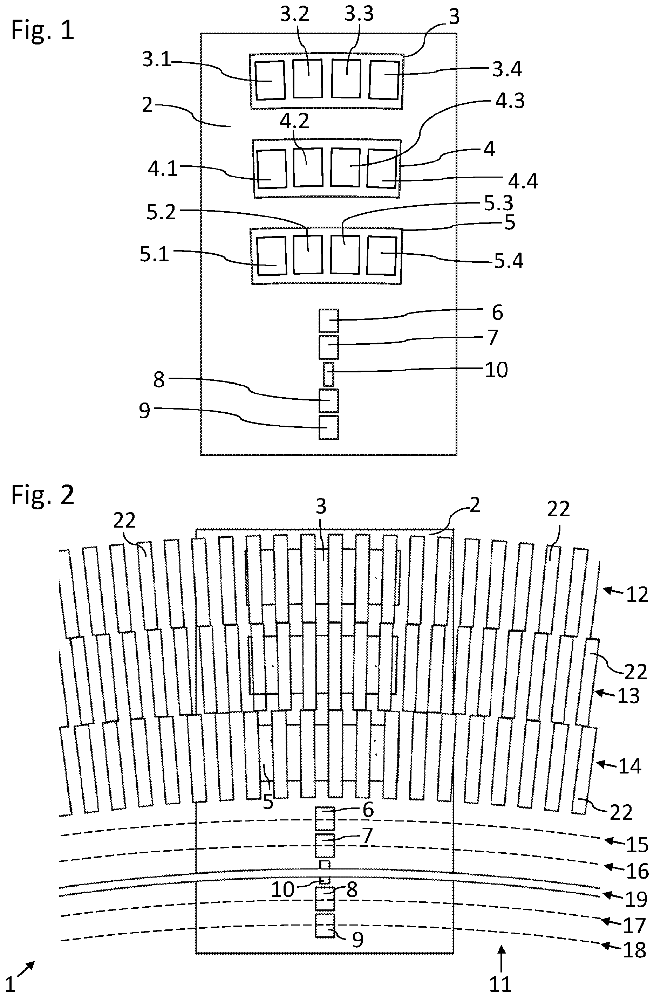

Fig. 1 zeigt eine erfindungsgemäße Positionssensorvorrichtung 2, welche zur Absolutpositionsbestimmung als Teil eines optischen Positionsencoders 1 genutzt werden kann. Die Positionssensorvorrichtung 2 weist dabei drei Analogsignal-Sensoren 3, 4, 5 auf, mit welchen eine Maßverkörperung 11 optisch abgetastet werden kann.

Die einzelnen Analogsignal-Sensoren 3, 4, 5 umfassen im dargestellten Ausführungsbeispiel jeweils vier Fotodioden 3.1 bis 3.4, 4.1 bis 4.4, 5.1 bis 5.4. Mit seinen Fotodioden 3.1 bis 3.4 kann der Analogsignal-Sensor 3 eine im Erfassungsbereich der Fotodioden 3.1 bis 3.4 liegende und dem Analogsignal-Sensor 3 zugeordnete Analog-Spur 12 der Maßverkörperung 11 an mehreren Stellen abtasten. Aus den Abtastergebnissen dieser vier Fotodioden 3.1 bis 3.4 kann ein positives und ein negatives Sinus-Signal sowie ein positives und ein negatives Cosinus-Signal erzeugt werden. Gleiches gilt auch für die Fotodioden 4.1 bis 4.4 des Analogsignal-Sensors 4, mit welchem eine dem Analogsignal-Sensor 4 zugeordnete Analog-Spur 13 abgetastet werden kann, sowie für die Fotodioden 5.1 bis 5.4 des Analogsignal-Sensors 5, mit welchem eine dem Analogsignal-Sensor 5 zugeordnete Analog-Spur 14 abgetastet werden kann.

Neben den Analogsignal-Sensoren 3, 4, 5 weist die in Fig. 1 dargestellte Positionssensorvorrichtung 2 insgesamt vier Digitalcode-Sensoren 6, 7, 8, 9 auf, mit welchen jeweils eine diesen zugeordnete Digitalcode-Spur 15, 16, 17, 18 der Maßverkörperung 11 zur Positionsbestimmung optisch abgetastet werden kann. Als weiteren Sensortyp weist die Positionssensorvorrichtung 2 hierüber hinaus einen Referenz-Sensor 10 auf, mit welchem sich eine Kontrast-Referenzspur 19 der Maßverkörperung 11 optisch abtasten lässt.

Um eine effektive und zuverlässige optische Abtastung der einzelnen Spuren der Maßverkörperung 11 mit der Positionssensorvorrichtung 2 zu ermöglichen, sind die Fotodioden 3.1 bis 3.4 des Analogsignal-Sensors 3, die Fotodioden 4.1 bis 4.4 des Analogsignal-Sensors 4 und die Fotodioden 5.1 bis 5.4 des Analogsignal-Sensors 5 jeweils im Wesentlichen entlang einer Achse der Positionssensorvorrichtung 2 in einer Reihe hintereinanderliegend angeordnet. Auf diese Weise sind die Analogsignal-Sensoren 3, 4, 5 im Wesentlichen als linienförmige Sensoren ausgestaltet. Insbesondere bei einer Positionssensorvorrichtung 2, welche auf das Abtasten kreisförmig verlaufender Analog-Spuren 12, 13, 14 zur Absolutpositionsbestimmung ausgelegt ist, kann diese linienförmige Ausgestaltung der Analogsignal-Sensoren 3, 4, 5 einem Kreissegment folgen.

Die Analogsignal-Sensoren 3, 4, 5 sind bei der Positionssensorvorrichtung 2 baulich gruppiert angeordnet, so dass auf der Oberseite der Positionssensorvorrichtung 2 keine weiteren Sensoren zwischen den Analogsignal-Sensoren 3, 4, 5 angeordnet sind. Die Analogsignal-Sensoren 3, 4, 5 liegen dabei im Wesentlichen quer zu den in Reihe liegenden Fotodioden 3.1 bis 3.4, 4.1 bis 4.4, 5.1 bis 5.4 der einzelnen Analogsignal-Sensoren 3, 4, 5 nebeneinander. Die Fotodioden 3.1 bis 3.4, 4.1 bis 4.4 und 5.1 bis 5.4 bilden auf diese Weise eine 3x4-Matrix aus Fotodioden, die zur optischen Abtastung der Maßverkörperung 11 dienen. Derart angeordnete Analogsignal-Sensoren 3, 4, 5 können insbesondere als ein monolithisches 3-Kanal-HD-Phased-Array gefertigt sein.

Auch die Digitalcode-Sensoren 6, 7, 8, 9 sowie der Referenz-Sensor 10 sind bei der in Fig. 1 dargestellten Positionssensorvorrichtung 2 baulich gruppiert. Jeder der Digitalcode-Sensoren 6, 7, 8, 9 sowie der Referenz-Sensor 10 weisen dabei eine einzelne Fotodiode auf. Entlang der gleichen Achse der Positionssensorvorrichtung 2, entlang welcher auch die Analogsignal-Sensoren 3, 4, 5 nebeneinanderliegend angeordnet sind, liegen auch die Digitalcode-Sensoren 6, 7, 8, 9 und der Referenz-Sensor 10 nebeneinander. Der Referenz-Sensor 10 ist dabei zwischen den Digitalcode-Sensoren 6, 7 auf der einen Seite und den Digitalcode-Sensoren 8, 9 auf der anderen Seite liegend angeordnet. Auf diese Weise unterteilt der Referenz-Sensor 10 die bauliche Gruppe der Digitalcode-Sensoren 6 bis 9 in zwei jeweils zwei Digitalcode-Sensoren 6, 7 bzw. 8, 9 aufweisende Untergruppen.

Die baulich gruppierten Analogsignal-Sensoren 3, 4, 5 sowie die baulich gruppierten Digitalcode-Sensoren 6 bis 9 und der Referenz-Sensor 10 bilden zwei entlang einer Achse der Positionssensorvorrichtung 2 einander gegenüberliegende bauliche Gruppen. Auf diese Weise ist die Positionssensorvorrichtung 2 in einen ersten Bereich zur optischen Abtastung der Analog-Spuren 12, 13, 14 mit den Analogsignal-Sensoren 3, 4, 5 zur Absolutpositionsbestimmung und einen zweiten Bereich zur optischen Abtastung der Digitalcode-Spuren 15 bis 18 und der Kontrast-Referenzspur 19 mit den Digitalcode-Sensoren 6 bis 9 und dem Referenz-Sensor 10 unterteilt. Der erste Bereich und der zweite Bereich liegen entlang einer Achse der Positionssensorvorrichtung 2 einander gegenüber.

Zur Absolutpositionsbestimmung kommt diese Positionssensorvorrichtung 2 in einem optischen Positionsencoder 1 zum Einsatz, wie er beispielsweise in Fig. 2 gezeigt wird. Neben der Positionssensorvorrichtung 2 und der sich im Abtastbereich der einzelnen Sensoren 3 bis 10 der Positionssensorvorrichtung 2 befindlichen Maßverkörperung 11 weist der optische Positionsencoder 1 eine in Fig. 2 nicht dargestellte Lichtquelle zur Beleuchtung der Maßverkörperung 11 auf. Mit dieser Lichtquelle wird die transmissive oder reflexive Maßverkörperung 11 beleuchtet, welche abhängig von den einzelnen auf ihr angeordneten Spuren 12 bis 19 dieses Licht in Richtung der Positionssensorvorrichtung 2 durchlassen oder reflektieren kann. Die Positionssensorvorrichtung 2 kann dieses transmittierte oder reflektierte Licht dann bei der optischen Abtastung mittels ihrer Sensoren 3 bis 10 erfassen.

Die Maßverkörperung 11 ist in Fig. 2 nur ausschnittsweise dargestellt und als Kreisscheibe ausgestaltet, deren Mittelpunkt auf der Drehachse des Bauteils angeordnet ist, dessen absolute Position während und/oder nach einer Drehbewegung bestimmt werden soll. Von den mehreren kreisförmig verlaufenden Spuren der Maßverkörperung 11 sind in Fig. 2 lediglich die Kontrast-Referenzspur 19 sowie die drei Analog-Spuren 12, 13, 14 zu erkennen. Neben diesen weist die Maßverkörperung 11 auch noch vier Digitalcode-Spuren 15, 16, 17, 18 auf, welche in der gezeigten Drehposition durchsichtig sind, daher bei einer reflexiven Maßverkörperung 11 kein Licht auf der Positionssensorvorrichtung 2 erzeugen und bei einer transmissiven Maßverkörperung 11 Licht zur Positionssensorvorrichtung 2 durchlassen, und nur als Strichlinie in Fig. 2 angedeutet werden. Gleichwohl ist in Fig. 2 zu erkennen, dass bei dem optischen Positionsencoder 1 jeder Digitalcode-Spur 15 bis 18 ein Digitalcode-Sensor 6 bis 9 und jeder Analog-Spur 12 bis 14 ein Analogsignal-Sensor 3 bis 5 zugeordnet ist.

Die Analog-Spuren 12 bis 14 sind zueinander in radialer Richtung benachbart angeordnet. Sie liegen radial außenliegend zu den Digitalcode-Spuren 15 bis 18 und der Kontrast-Referenzspur 19. Auch die Digitalcode-Spuren 15 bis 18 und die Kontrast-Referenzspur 19 sind in radialer Richtung einander benachbart angeordnet. Die Analog-Spuren 12 bis 14 und die Digitalcode-Spuren 15 bis 19 sind bei der Maßverkörperung 11 daher voneinander getrennt, so dass keine Analog-Spur 12 bis 14 zwischen den Digitalcode-Spuren 15 bis 18 und keine Digitalcode-Spur 15 bis 18 zwischen den Analog-Spuren 12 bis 14 liegt. Auf diese Weise werden die Analog-Spuren 12 bis 14 aufgrund ihrer benachbarten Anordnung von der Lichtquelle mit Licht im Wesentlichen gleicher Intensität beleuchtet, so dass Messfehler aufgrund einer unterschiedlich starken Beleuchtung vermieden werden können. In gleicher Weise werden auch die Digitalcode-Spuren 15 bis 18 zusammen mit der Kontrast-Referenzspur 19 von der Lichtquelle mit Licht im Wesentlichen gleicher Intensität beleuchtet, so dass auch beim Abtasten dieser Spuren Messfehler aufgrund unterschiedlicher Beleuchtungsintensitäten vermieden werden können.

Wie in Fig. 2 gezeigt, bestehen die Analog-Spuren 12, 13, 14 jeweils aus einer in Umfangsrichtung hintereinander angeordneten Abfolge von einzelnen reflektiven Strichen 22, welche ein Strichmustern bilden. Diese Striche 22 können von den Analogsignal-Sensoren 3, 4, 5 bei der optischen Abtastung der Maßverkörperung 11 erfasst werden. Da sich die Analog-Spuren 12, 13, 14 in ihrer Strichzahl entlang der gesamten Maßverkörperung 11 voneinander unterscheiden, ergibt sich entlang der Analog-Spuren 12, 13, 14 ein positionsabhängiger Versatz zwischen den Strichmustern der einzelnen Analog-Spuren 12, 13, 14. Dieser positionsabhängige Versatz wird durch die Analogsignal-Sensoren 3, 4, 5 der Positionssensorvorrichtung 2 bei der Nonius-und-Segment-Spur-Abtastung erfasst und zur Bestimmung eines Positionswertes bei der Absolutpositionsbestimmung genutzt.

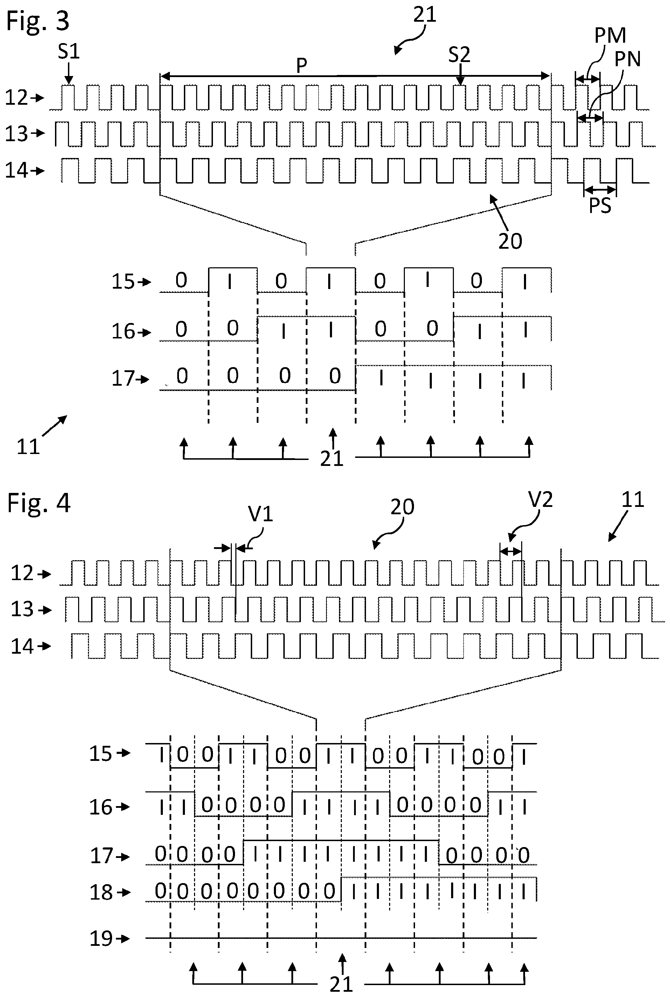

Anhand der Fig. 3 und 4 wird im Folgenden das Zusammenwirken der Analog-Spuren 12 bis 14 und der Digitalcode-Spuren 15 bis 18 nähergehend erläutert. Dabei werden die Analog-Spuren 12 bis 14 im Unterschied zur Fig. 2 nicht mehr als reine Abfolge von Strichen 22 dargestellt, sondern vielmehr als ortsaufgelöstes Abtastergebnis, welches ein Sensor der Positionssensorvorrichtung 2 bei der optischen Abtastung erfassen würde. Der entsprechende rechteckförmige Verlauf der Abtastergebnisse ist dabei so zu verstehen, dass bei einem Abtastergebnis auf dem oberen Niveau einer der Striche 22 der jeweiligen Analog-Spur 12, 13, 14 erfasst wird, während bei einem Abtastergebnis auf dem unteren Niveau eine Lücke zwischen den Strichen 22 der jeweiligen Analog-Spur 12, 13, 14 erfasst wird.

Wenngleich in den Fig. 3 und Fig. 4 zur Erleichterung des Verständnisses der Verlauf der Analog-Spuren 12 bis 14 und der Digital-Spuren 15 bis 18 sowie der Kontrast-Spur 19 geradlinig dargestellt sind, gelten die folgenden Ausführungen in gleicher Weise auch für kreisförmig verlaufende Spuren 12 bis 19.

Über die Analog-Spuren 12, 13, 14 hinweg wird dabei ein gemeinsames Muster 20 durch die Abfolge der einzelnen Striche 22 gebildet. Entlang der Analog-Spuren 12 bis 14 der Maßverkörperung 11 wiederholt sich dieses gemeinsame Muster 20 nach einer Periodenlänge P. Dieses gemeinsame Muster 20 beginnt dabei mit gleich ausgerichteten Strichen 22, d. h. ohne einen Versatz zwischen den jeweiligen Strichmustern der einzelnen Analog-Spuren 12, 13, 14. Da sich die Striche 22 der Analog-Spuren 12, 13, 14 in ihrer Breite und ihrem Abstand entlang der jeweiligen Analog-Spur 12, 13, 14 von den Strichen 22 der jeweils anderen Analog-Spuren 12, 13, 14 unterscheiden, weisen die einzelnen Strichmuster der Analog-Spuren 12, 13, 14 jeweils unterschiedliche Periodenlängen PM, PN und PS auf.

Ausgehend von dem versatzlosen Anfang des gemeinsamen Musters 20 nimmt der Versatz zwischen den Strichmustern der Analog-Spuren 12, 13, 14 entlang der Spuren zu. In Fig. 4 ist dies exemplarisch für den Versatz zwischen der Analog-Spur 12 und der Analog-Spur 13 gezeigt. Während zu Beginn des gemeinsamen Musters 20 kein Versatz zwischen diesen besteht, lässt sich nach wenigen Periodenlägen PM des Strichmusters der Analog-Spur 12 bereits ein Versatz V1 zwischen der Analog-Spur 12 und der Analog-Spur 13 feststellen. Entlang der beiden Analog-Spuren 12, 13 nimmt dieser Versatz stetig zu, so dass in Richtung des Endes des gemeinsamen Musters 20 ein Versatz V2 zwischen den Strichmustern der Analog-Spur 12 und der Analog-Spur 13 besteht, welcher deutlich größer als der Versatz V1 ist.

Der Unterschied zwischen den Periodenlängen PM, PN und PS ist derart gewählt, dass nach einer Periodenlänge P des gemeinsamen Musters 20 die Strichmuster der Analog-Spuren 12, 13, 14 wieder in Phase sind und das gemeinsame Muster 20 daraufhin erneut wiederholt wird. Durch dieses sich periodisch wiederholende Muster 20 wird die Maßverkörperung 11 in einzelne Abschnitt 21 unterteilt, bei welchen es sich insbesondere bei kreisförmigen Analog-Spuren 12 bis 14 und Digitalcode-Spuren 15 bis 19 um Winkel-Sektoren handelt.

Da jeder Abschnitt 21 das gleiche gemeinsame Muster 20 der Analog-Spuren 12, 13, 14 aufweist, ist es anhand einer reinen Nonius-und-Segment-Spur-Abtastung nicht möglich, eine Absolutposition eindeutig zu bestimmen. So liefert das durch die Strichmuster der einzelnen Analog-Spuren 12, 13, 14 gebildete gemeinsame Muster 20 bei einer optischen Abtastung mit der Positionssensorvorrichtung 2 an der Stelle S2 der Maßverkörperung 11 die gleichen Abtastergebnisse, wie eine optische Abtastung der sich im vorangegangenen Abschnitt 21 der Maßverkörperung 11 befindliche Stelle S1, da beide Stellen S1, S2 eine Periodenlänge P des gemeinsamen Musters 20 voneinander beabstandet sind. Abhängig von der Anzahl der Abschnitte 21 der Maßverkörperung 11 liefert eine reine Nonius-und-Segment-Spur-Abtastung daher an einer der Anzahl der einzelnen Abschnitte entsprechenden Anzahl von Positionen der Maßverkörperung 11 jeweils den gleichen Positionswert.

Entlang des gemeinsamen Musters 20 und damit innerhalb eines Abschnitts 21 sind die einzelnen Positionswerte der Nonius-und-Segment-Spur-Abtastung jedoch eindeutig. Durch eine zur reinen Nonius-und-Segment-Spur-Abtastung hinzukommende eindeutige Identifizierung der einzelnen Abschnitte 21 der Maßverkörperung 11 ist es daher möglich, die Absolutposition aus der Vielzahl von Stellen der Maßverkörperung mit identischen Positionswerten aus der zu bestimmen. Diese eindeutige Identifizierung der einzelnen Abschnitte 21 wird mittels der mindestens drei Digitalcode-Spuren 15, 16, 17 ermöglicht, welche von den ihnen zugeordneten Digitalcode-Sensoren 6, 7, 8 der Positionssensorvorrichtung 2 optisch abgetastet werden können.

In Fig. 3 ist dies für eine Ausgestaltung der Maßverkörperung 11 mit drei Digitalcode-Spuren 15, 16, 17 gezeigt, welche im Vergleich zu den Analog-Spuren 12, 13, 14 in einem kleineren Maßstab dargestellt sind. Quer zur Länge der einzelnen Digitalcode-Spuren 15, 16, 17 bilden diese einen dem Abschnitt 21 zugeordneten und diesen identifizierenden Digitalcode in Form eines 3-Bit-Binär-Codes. Die Digitalcode-Spuren 15, 16, 17 sind dabei derart ausgelegt, dass bei der optischen Abtastung mit den jeweiligen Digitalcode-Sensoren 6, 7, 8 entweder ein Abtastergebnis auf einem oberen Niveau, beispielsweise wenn die jeweilige Digitalcode-Spur 15, 16, 17 das Licht der Lichtquelle in Richtung des jeweiligen Digitalcode-Sensors 6, 7, 8 leitet, oder ein Abtastergebnis auf einem unteren Niveau liefert, wenn die jeweilige Digitalcode-Spur 15, 16, 17 das Licht der Lichtquelle nicht auf den jeweiligen Digitalcode-Sensoren 6, 7, 8 treffen lässt. Anders als die Analog-Spuren 12, 13, 14 weisen die Digitalcode-Spuren 15, 16, 17 daher kein periodisches Strichmuster innerhalb eines Abschnitts 21 auf, sondern weisen eine entlang des gesamten Abschnitts 21 gleichbleibende Struktur auf.

Jeder der Digitalcode-Spuren 15, 16, 17 liefert bei der optischen Abtastung ein Bit eines Digitalcodes, mit welchem der Abschnitt 21 eindeutig unter den mehreren Abschnitten 21 der Maßverkörperung 11 bestimmt werden kann. In Fig. 3 sind die einzelnen Bit-Werte "I" und "0" der Digitalcode-Spuren 15, 16, 17 für die einzelnen Abschnitte 21 eingezeichnet. Für den Abschnitt 21, dessen gemeinsames Muster 20 der Analog-Spuren 12, 13, 14 vollständig gezeigt ist, würde auf diese Weise beispielsweise der Digitalcode "II0" erzeugt werden, welcher diesen Abschnitt 21 eindeutig unter den anderen Abschnitten 21 der Maßverkörperung 11 identifiziert. Mit diesem aus den Abtastergebnissen der Digitalcode-Sensoren 6, 7, 8 erzeugten Digitalcode kann die Absolutposition zusammen mit dem Ergebnis der Nonius-und-Segment-Spur-Abtastung eindeutig bestimmt werden.

Dies gilt in gleicher Weise auch für die in Fig. 4 dargestellte Maßverkörperung 11 mit vier Digitalcode-Spuren 15 bis 16 und einer Kontrast-Referenzspur 19, so dass im Folgenden nur noch auf die Unterschiede zum Ausführungsbeispiel der Fig. 3 eingegangen werden soll.

Durch die Verwendung einer zusätzlichen vierten Digitalcode-Spur 18 wird aus den Abtastergebnissen der Digitalcode-Sensoren 6, 7, 8, 9 ein 4-Bit-Digitalcode erzeugt und zur Identifizierung des Abschnitts 21 der Maßverkörperung 11 bei der Absolutpositionsbestimmung genutzt.

Durch die Verwendung von vier Digitalcode-Spuren 15 bis 18 ist es beispielsweise bei einer Maßverkörperung 11 mit acht identischen Abschnitten 21 möglich, jedem Abschnitt zwei Digitalcodes zuzuordnen. Auf diese Weise können die einzelnen Abschnitte 21 in zwei individuell adressierte Hälften unterteilt werden. Insbesondere bei einer Maßverkörperung 11 mit 45°-Sektoren, bei welcher sich das rechte Ende der in Fig. 4 dargestellten Maßverkörperung 11 an dessen linkes Ende anschließt und sich die Spuren der Maßverkörperung 11 so über einen Vollkreis erstreckt, kann jeder Winkel-Sektor so zusätzlich in zwei 22,5°-Hälften unterteilt werden. Mit dieser zusätzlichen Unterteilung der Abschnitte 21 kann eine stabilere und zuverlässigere Synchronisation der Abtastergebnisse der Analog-Spuren 12, 13, 14 und der Abtastergebnisse der Digitalcode-Spuren 15, 16, 17, 18 erzielt werden.

Anders als der Digitalcode der Digitalcode-Spuren 15, 16, 17 der Fig. 1 ist der 4-Bit-Digitalcode der Digitalcode-Spuren 15 bis 18 des Ausführungsbeispiels der Fig. 4 als Gray-Code ausgestaltet. Bei einem Gray-Code erfolgt bei einem Übergang zwischen zwei benachbarten Abschnitten 21 lediglich eine Veränderung eines einzelnen Bitwerts, wodurch Auslesefehler verringert werden können. Die einzelnen den jeweiligen Hälften der Abschnitte 21 zugeordneten Bitwerte der Digitalcode-Spuren 15 bis 18 sind in Fig. 4 mit eingezeichnet. Für den das gesamte gemeinsame Muster 20 zeigenden Sektor ergeben sich bei der quer zum Verlauf der Digitalcode-Spuren 15 bis 18 ergebenden Auslesung des Digitalcodes dabei der Digitalcode "III0" und "IIII" als eindeutige Identifikatoren der ersten bzw. der zweiten Hälfte des Abschnitts 21.

Hierüber hinaus weist die Maßverkörperung 11 der Fig. 4 auch eine Kontrast-Referenzspur 19 auf. Im Gegensatz zu den Digitalcode-Spuren 15 bis 18 und den Analog-Spuren 12 bis 14 weist die Kontrast-Referenzspur 19 keinerlei Modulation entlang der Maßverkörperung 11 auf, sondern liefert ein konstantes Abtastergebnis bei einer optischen Abtastung durch den Referenz-Sensor 10.

Die Intensität dieses Abtastergebnisses liegt dabei im Bereich, insbesondere in der Mitte, zwischen dem oberen Niveau bei einer Abtastung der Digitalcode-Spuren 15 bis 18 durch die Digitalcode-Sensoren 6 bis 9 und dem unteren Niveau bei der Abtastung der Digitalcode-Spuren 15 bis 18 durch die Digitalcode-Sensoren 6 bis 9, wenn die Digitalcode-Spuren 15 bis 18 und die Kontrast-Referenzspur 19 mit lichtgleicher Intensität beleuchtet werden. Auf diese Weise kann das Abtastergebnis der optischen Abtastung der Kontrast-Referenzspur 19 als Schaltschwelle bei der Erzeugung des Digitalcodes genutzt werden, so dass sich Intensitätsschwankungen der Lichtquelle nicht auf die Erzeugung des Digitalcodes auswirken. Detektiert ein Digitalcode-Sensor 6 bis 9 bei der optischen Abtastung einer Digitalcode-Spur 15 bis 18 eine oberhalb der anhand der Abtastung der Kontrast-Referenzspur 19 ermittelten Schaltschwelle liegende Lichtintensität, wird diesem Abtastergebnis der Bitwert "I" zugeordnet. Detektiert der Digitalcode-Sensor 6 bis 9 bei der optischen Abtastung hingegen eine unterhalb der anhand der Abtastung der Kontrast-Referenzspur 19 ermittelten Schaltschwelle liegende Lichtintensität, wird diesem Abtastergebnis der Bitwert "0" zugeordnet.

Mit Hilfe der vorstehend beschriebenen Positionssensorvorrichtung 2, dem optischen Positionsencoder 1 und dem Verfahren zur Absolutpositionsbestimmung ist es möglich, die Verlässlichkeit bei der Absolutpositionsbestimmung zu steigern.

### Bezugszeichen:

- 1: Optischer Positionsencoder
- 2: Positionssensorvorrichtung
- 3: Analogsignal-Sensor
- 3.1 - 3.4: Fotodiode
- 4: Analogsignal-Sensor
- 4.1 - 4.4: Fotodiode
- 5: Analogsignal-Sensor
- 5.1 - 5.4: Fotodiode
- 6 - 9: Digitalcode-Sensor
- 10: Referenz-Sensor
- 11: Maßverkörperung
- 12 - 14: Analog-Spur
- 15 - 18: Digitalcode-Spur
- 19: Kontrast-Referenzspur
- 20: gemeinsames Muster
- 21: Abschnitt
- 22: Strich
- P: Periodenlänge
- PM: Periodenlänge
- PN: Periodenlänge
- PS: Periodenlänge
- V1: Versatz
- V2: Versatz
- S1: Stelle
- S2: Stelle

## Patentansprüche

1. Positionssensorvorrichtung für einen optischen Positionsencoder (1) mit
drei Analogsignal-Sensoren (3, 4, 5) eingerichtet zur optischen Nonius-und-Segment-Spur-Abtastung von drei Analog-Spuren (12, 13, 14) einer Maßverkörperung (11), insbesondere mit unterschiedlicher Strichzahl,
**gekennzeichnet durch** mindestens drei Digitalcode-Sensoren (6, 7, 8, 9) eingerichtet zur optischen Abtastung jeweils einer digitalen Digitalcode-Spur (15, 16, 17, 18) der Maßverkörperung (11) und eingerichtet zur Erzeugung eines Digitalcodes zur Absolutpositionsbestimmung und einen Referenz-Sensor (10) eingerichtet zur optischen Abtastung einer Kontrast-Referenzspur (19) der Maßverkörperung (11), wobei das Abtastergebnis des Referenz-Sensors (10) als Schaltschwelle bei der Erzeugung des Digitalcodes genutzt wird.

2. Positionssensorvorrichtung nach Anspruch 1, **dadurch gekennzeichnet, dass** die Analogsignal-Sensoren (3, 4, 5) jeweils mehrere Fotodioden (3.1-3.4, 4.1-4.4, 5.1-5.4) aufweisen, insbesondere zur Erzeugung eines positiven und eines negativen Sinus-Signals und/oder Cosinus-Signals je Analog-Spur (12, 13, 14).

3. Positionssensorvorrichtung nach einem der vorangehenden Ansprüche, **gekennzeichnet durch** einen vierten Digitalcode-Sensor (9) zur optischen Abtastung einer digitalen Digitalcode-Spur (18) der Maßverkörperung (11).

4. Positionssensorvorrichtung nach einem der vorangehenden Ansprüche, **dadurch gekennzeichnet, dass** die Digitalcode-Sensoren (6, 7, 8, 9) und/oder der Referenz-Sensor (10) einzelne Fotodioden sind.

5. Positionssensorvorrichtung nach einem der vorangehenden Ansprüche, **dadurch gekennzeichnet, dass** die Analogsignal-Sensoren (3, 4, 5), der Referenz-Sensor (10) und/oder die Digitalcode-Sensoren (6, 7, 8, 9) mindestens eine chevronförmige Fotodiode aufweisen.

6. Optischer Positionsencoder zur Absolutpositionsbestimmung, welcher eine Lichtquelle, eine von der Lichtquelle beleuchtbare Maßverkörperung (11) und eine Positionssensorvorrichtung (2) nach einem der vorhergehenden Ansprüche zur Abtastung der Maßverkörperung (11) aufweist, wobei die Maßverkörperung (11) mindestens drei Digitalcode-Spuren (15, 16, 17, 18), eine Kontrast-Referenzspur (19) und drei Analog-Spuren (12, 13, 14), insbesondere mit unterschiedlicher Strichzahl, aufweist.

7. Optischer Positionsencoder nach Anspruch 6, **dadurch gekennzeichnet, dass** die Kontrast-Referenzspur derart musterlos ausgestaltet ist, dass sie unabhängig von der Position der Maßverkörperung bei der Abtastung durch den Referenz-Sensor ein gleichbleibendes und nur von der Intensität der Beleuchtung abhängiges Abtastergebnis liefert.

8. Optischer Positionsencoder nach Anspruch 6 oder 7, **dadurch gekennzeichnet, dass** die Kontrast-Referenzspur (19) derart ausgestaltet ist, dass sie bei Beleuchtung durch die Lichtquelle in Durchlichtanordnung Licht zur Positionssensorvorrichtung durchlässt oder in Reflexionsanordnung Licht zur Positionssensorvorrichtung (2) reflektiert, dessen Intensität zwischen der bei gleicher Beleuchtung maximal und minimal von den Digitalcode-Spuren (15, 16, 17, 18) transmittierten bzw. reflektierten Intensitäten liegt.

9. Optischer Positionsencoder nach einem der Ansprüche 6 bis8, **gekennzeichnet durch** ein von den Analog-Spuren (12, 13, 14) gebildetes, sich entlang der Maßverkörperung (11), insbesondere 4-fach, 8-fach oder 16-fach, wiederholendes gemeinsames Muster (20).

10. Optischer Positionsencoder nach Anspruch 9, **dadurch gekennzeichnet, dass** die Maßverkörperung (11) durch das sich periodisch wiederholende gemeinsame Muster (20) in einzelne, der Periodenlänge (P) des gemeinsamen Musters (20) entsprechende Abschnitte (21), insbesondere Winkel-Sektoren, insbesondere bevorzugt in 90°-Sektoren, 45°-Sektoren oder 22,5°-Sektoren, unterteilt ist.

11. Optischer Positionsencoder nach Anspruch 9 oder 10, **dadurch gekennzeichnet, dass** die für mehrere Positionen der Maßverkörperung (11), an welchen das über sämtliche Analog-Spuren (12, 13, 14) hinweg gebildete gemeinsame Muster identisch ist, die gleichen Positionswerte liefert, wobei anhand der zusätzlichen Abtastergebnisse der Digitalcode-Sensoren (6, 7, 8, 9) eine eindeutige Absolutpositionsbestimmung unter diesen Stellen gleicher Positionswerte möglich ist.

12. Optischer Positionsencoder nach einem der Ansprüche 6 bis 11, **dadurch gekennzeichnet, dass** die Analog-Spuren (12, 13, 14) zueinander, insbesondere radial, benachbart angeordnet sind.

13. Optischer Positionsencoder nach einem der Ansprüche 6 bis 12, **dadurch gekennzeichnet, dass** die Digitalcode-Spuren (15, 16, 17, 18), insbesondere die Digitalcode-Spuren (15, 16, 17, 18) und die Kontrast-Referenzspur (19), zueinander benachbart angeordnet sind.

14. Verfahren zur Absolutpositionsbestimmung mit einer Lichtquelle, einer von der Lichtquelle beleuchtbaren Maßverkörperung (11) und einer Positionssensorvorrichtung (2) mit drei Analogsignal-Sensoren (3, 4, 5) zur Abtastung der Maßverkörperung (11), wobei die Maßverkörperung (11) mindestens drei Analog-Spuren (12, 13, 14), insbesondere mit unterschiedlicher Strichzahl, aufweist, mit der Lichtquelle die Maßverkörperung (11) beleuchtet wird und mit den Analogsignal-Sensoren (3, 4, 5) eine optische der Analog-Spuren durchgeführt wird,
**dadurch gekennzeichnet,**
**dass** die Positionssensorvorrichtung (2) mindestens drei Digitalcode-Sensoren (6, 7, 8, 9) und die Maßverkörperung (11) mindestens drei Digitalcode-Spuren (15, 16, 17, 18) aufweist, wobei die Digitalcode-Spuren (15, 16, 17, 18) mit den Digitalcode-Sensoren (6, 7, 8, 9) optisch abgetastet werden, aus den Abtastergebnissen der Digitalcode-Sensoren (6, 7, 8, 9) ein, insbesondere mindestens 3-Bit, Digitalcode erzeugt wird und mit dem Digitalcode eine Absolutposition bestimmt wird, und mit einem Referenz-Sensor (10) eine Kontrast-Referenzspur (19) der Maßverkörperung (11) optisch abgetastet wird und das Abtastergebnis des Referenz-Sensors (10) als Schaltschwelle bei der Erzeugung des Digitalcodes genutzt wird.

15. Verfahren nach Anspruch 14, **dadurch gekennzeichnet, dass** mittels des Digitalcodes ein Abschnitt (21) unter mehreren, insbesondere 4, 8 oder 16, Abschnitten (21) der Maßverkörperung (11), welche jeweils Stellen (S1, S2) mit gleichen Positionswerten aus der Nonius-und-Segment-Spur-Abtastung aufweisen, bestimmt wird.

## Claims

1. Position sensor device for an optical position encoder (1) with three analogue signal sensors (3, 4, 5) for optical vernier and segment track scanning of three analogue tracks (12, 13, 14) of a material measure (11), in particular with different numbers of lines,
**characterized by**
at least three digital code sensors (6, 7, 8, 9) configured for optical scanning of a respective digital code track (15, 16, 17, 18) of the material measure (11) and configured for generating a digital code for absolute position determination and a reference sensor (10) configured for optical scanning a contrast reference track (19) of the material measure (11), wherein the scanning result of the reference sensor (10) is used as a switching threshold when generating the digital code.

2. Position sensor device according to claim 1, **characterized in that** the analogue signal sensors (3, 4, 5) each comprise a plurality of photodiodes (3.1-3.4, 4.1-4.4, 5.1-5.4), in particular for generating a positive and a negative sine signal and/or cosine signal per analogue track (12, 13, 14).

3. Position sensor device according to one of the preceding claims, **characterized by** a fourth digital code sensor (9) for optically scanning a digital code track (18) of the material measure (11).

4. Position sensor device according to one of the preceding claims, **characterized in that** the digital code sensors (6, 7, 8, 9) and/or the reference sensor (10) are individual photodiodes.

5. Position sensor device according to one of the preceding claims, **characterized in that** the analogue signal sensors (3, 4, 5), the reference sensor (10) and/or the digital code sensors (6, 7, 8, 9) comprise at least one chevron-shaped photodiode.

6. Optical position encoder for absolute position determination, which comprises a light source, a material measure (11) which can be illuminated by the light source and a position sensor device (2) according to one of the preceding claims for scanning the material measure (11), wherein the material measure (11) has at least three digital code tracks (15, 16, 17, 18), a contrast reference track (19) and three analogue tracks (12, 13, 14), in particular with different numbers of lines.

7. Optical position encoder according to claim 6, **characterized in that** the contrast reference track is configured to be patternless in such a way that, independently of the position of the material measure during scanning by the reference sensor, it provides a constant scanning result dependent only on the intensity of the illumination.

8. Optical position encoder according to claim 6 or 7, **characterized in that** the contrast reference track (19) is configured in such a way that, upon illumination by the light source in a transmitted-light arrangement, it allows light to pass through to the position sensor device, or in a reflection arrangement, it reflects light to the position sensor device (2), the intensity of said light lying between the intensities maximally and minimally transmitted or reflected, respectively, by the digital code tracks (15, 16, 17, 18) under the same illumination.

9. Optical position encoder according to one of the claims 6 to 8, **characterized by** a common pattern (20) formed by the analogue tracks (12, 13, 14) and repeated along the material measure (11), in particular 4-fold, 8-fold or 16-fold.

10. Optical position encoder according to claim 9, **characterized in that** the material measure (11) is divided by the periodically repeating common pattern (20) into individual sections (21) corresponding to the period length (P) of the common pattern (20), in particular angle sectors, in particular preferably 90° sectors, 45° sectors or 22.5° sectors.

11. Optical position encoder according to claim 9 or 10, **characterized in that** the vernier and segment track scanning, for a plurality of positions of the material measure (11) at which the common pattern formed across all analogue tracks (12, 13, 14) is identical, provides the same position values, wherein, on the basis of the additional scanning results of the digital code sensors (6, 7, 8, 9), an unambiguous absolute position determination among these locations of identical position values is possible.

12. Optical position encoder according to one of claims 6 to 11, **characterized in that** the analogue tracks (12, 13, 14) are arranged adjacent to one another, in particular radially.

13. Optical position encoder according to one of claims 6 to 12, **characterized in that** the digital code tracks (15, 16, 17, 18), in particular the digital code tracks (15, 16, 17, 18) and the contrast reference track (19), are arranged adjacent to one another.

14. Method for absolute position determination with a light source, a material measure (11) which can be illuminated by the light source and a position sensor device (2) with three analogue signal sensors (3, 4, 5) for scanning the material measure (11), wherein the material measure (11) comprises at least three analogue tracks (12, 13, 14), in particular with different numbers of lines, the material measure (11) is illuminated with the light source and optical vernier and segment track scanning of the analogue tracks is performed with the analogue signal sensors (3, 4, 5), **characterized in**
**that** the position sensor device (2) has at least three digital code sensors (6, 7, 8, 9) and the material measure (11) has at least three digital code tracks (15, 16, 17, 18), wherein the digital code tracks (15, 16, 17, 18) are optically scanned with the digital code sensors (6, 7, 8, 9), a digital code, in particular at least 3-bit, is generated from the scanning results of the digital code sensors (6, 7, 8, 9) and an absolute position is determined with the digital code, and a contrast reference track (19) of the material measure (11) is optically scanned with a reference sensor (10) and the scanning result of the reference sensor (10) is used as a switching threshold when generating the digital code.

15. Method according to claim 14, **characterized in that** the digital code is used to determine a section (21) from a plurality of sections (21), in particular 4, 8 or 16, of the material measure (11), which each have positions (S1, S2) with the same position values from the vernier and segment track scanning.

## Revendications

1. Dispositif capteur de position pour un codeur de position optique (1) comprenant trois capteurs de signaux analogiques (3, 4, 5) conçus pour le balayage optique des pistes vernier et segment de trois pistes analogiques (12, 13, 14) d'un étalon (11), en particulier avec un nombre différent de traits,
**caractérisé par**
au moins trois capteurs de code numérique (6, 7, 8, 9) conçus pour le balayage optique respectivement d'une piste numérique de code numérique (15, 16, 17, 18) de l'étalon (11) et conçus pour générer un code numérique destiné à la détermination de position absolue et un capteur de référence (10) conçu pour le balayage optique d'une piste de référence de contraste (19) de l'étalon (11), le résultat de balayage du capteur de référence (10) étant utilisé comme seuil de commutation lors de la génération du code numérique.

2. Dispositif capteur de position selon la revendication 1, **caractérisé en ce que** les capteurs de signaux analogiques (3, 4, 5) possèdent respectivement plusieurs photodiodes (3.1-3.4, 4.1-4.4, 5.1-5.4), en particulier pour générer un signal sinusoïdal et/ou un signal cosinusoïdal positif et négatif par piste analogique (12, 13, 14).

3. Dispositif capteur de position selon l'une des revendications précédentes, **caractérisé par** un quatrième capteur de code numérique (9) destiné au balayage optique d'une piste numérique de code numérique (18) de l'étalon (11).

4. Dispositif capteur de position selon l'une des revendications précédentes, **caractérisé en ce que** les capteurs de code numérique (6, 7, 8, 9) et/ou le capteur de référence (10) sont des photodiodes individuelles.

5. Dispositif capteur de position selon l'une des revendications précédentes, **caractérisé en ce que** les capteurs de signaux analogiques (3, 4, 5), le capteur de référence (10) et/ou les capteurs de code numérique (6, 7, 8, 9) possèdent au moins une photodiode en forme de chevron.

6. Codeur de position optique destiné à la détermination de position absolue, lequel possède une source de lumière, un étalon (11) éclairable par la source de lumière et un dispositif capteur de position (2) selon l'une des revendications précédentes destiné au balayage de l'étalon (11), l'étalon (11) possédant au moins trois pistes de code numérique (15, 16, 17, 18), une piste de référence de contraste (19) et trois pistes analogiques (12, 13, 14), en particulier avec un nombre différent de traits.

7. Codeur de position optique selon la revendication 6, **caractérisé en ce que** la piste de référence de contraste est configurée sans motif de telle sorte que, indépendamment de la position de l'étalon, elle fournit un résultat de balayage uniforme et dépendant uniquement de l'intensité de l'éclairement lors du balayage par le capteur de référence.

8. Codeur de position optique selon la revendication 6 ou 7, **caractérisé en ce que** la piste de référence de contraste (19) est configurée de telle sorte que lorsqu'elle est éclairée par la source de lumière, elle laisse passer la lumière vers le dispositif capteur de position dans un arrangement de lumière transmise ou réfléchit la lumière vers le dispositif capteur de position (2) dans un arrangement de réflexion, dont l'intensité se situe entre les intensités transmises ou réfléchies par les pistes de code numérique (15, 16, 17, 18) au maximum et au minimum pour un même éclairage.

9. Codeur de position optique selon l'une des revendications 6 à 8, **caractérisé par** un motif commun (20) formé par les pistes analogiques (12, 13, 14), qui se répète le long de l'étalon (11), en particulier 4 fois, 8 fois ou 16 fois.

10. Codeur de position optique selon la revendication 9, **caractérisé en ce que** l'étalon (11) est divisé par le motif commun (20) qui se répète périodiquement en portions individuelles (21) correspondant à la longueur de période (P) du motif commun (20), en particulier en secteurs angulaires, notamment de préférence en secteurs de 90°, en secteurs de 45° ou en secteurs de 22,5°.

11. Codeur de position optique selon la revendication 9 ou 10, **caractérisé en ce que** le balayage des pistes vernier et segment fournit les mêmes valeurs de position pour une pluralité de positions de l'étalon (11) au niveau desquelles le motif commun formé sur toutes les pistes analogiques (12, 13, 14) est identique, une détermination de position absolue unique étant possible pour ces emplacements des mêmes valeurs de position à l'aide des résultats de balayage supplémentaires des capteurs de code numérique (6, 7, 8, 9).

12. Codeur de position optique selon l'une des revendications 6 à 11, **caractérisé en ce que** les pistes analogiques (12, 13, 14) sont disposées les unes à côté des autres, en particulier radialement.

13. Codeur de position optique selon l'une des revendications 6 à 12, **caractérisé en ce que** les pistes de code numérique (15, 16, 17, 18), en particulier les pistes de code numérique (15, 16, 17, 18) et la piste de référence de contraste (19), sont disposées les unes à côté des autres.

14. Procédé de détermination de position absolue avec une source de lumière, un étalon (11) qui peut être éclairé par la source de lumière et un dispositif capteur de position (2) comprenant trois capteurs de signaux analogiques (3, 4, 5) destinés au balayage de l'étalon (11), l'étalon (11) possédant au moins trois pistes analogiques (12, 13, 14), en particulier avec un nombre de traits différent, l'étalon (11) étant éclairé avec la source de lumière et un balayage optique des pistes vernier et segment des pistes analogiques étant effectué avec les capteurs de signaux analogiques (3, 4, 5),
**caractérisé en ce que**
le dispositif capteur de position (2) possède au moins trois capteurs de code numérique (6, 7, 8, 9) et l'étalon (11) au moins trois pistes de code numérique (15, 16, 17, 18), les pistes de code numérique (15, 16, 17, 18) étant balayées optiquement par les capteurs de code numérique (6, 7, 8, 9), un code numérique, en particulier d'au moins 3 bits, étant généré à partir des résultats de balayage des capteurs de code numérique (6, 7, 8, 9) et une position absolue étant déterminée avec le code numérique, et une piste de référence de contraste (19) de l'étalon (11) étant balayée optiquement avec un capteur de référence (10) et le résultat de balayage du capteur de référence (10) étant utilisé comme seuil de commutation lors de la génération du code numérique.

15. Procédé selon la revendication 14, **caractérisé en ce qu'**une portion (21) parmi plusieurs, en particulier 4, 8 ou 16, portions (21), de l'étalon (11), lesquelles présentent respectivement des emplacements (S1, S2) avec les mêmes valeurs de position issues du balayage des pistes vernier et segment, est déterminée au moyen du code numér
